# EUROPÄISCHE PATENTSCHRIFT

(11) **EP 0 569 677 B1**
(45) Veröffentlichungstag und Bekanntmachung des Hinweises auf die Patenterteilung: **27.09.1995**
(21) Anmeldenummer: 93103798.0
(22) Anmeldetag: 10.03.1993
(51) Int. Cl.: F16C 33/80, F16C 33/76

(54) **Dichtungsanordnung**
Sealing arrangement
Agencement d'étanchéité

(30) Priorität: 11.05.1992 DE 9206010 U
(43) Veröffentlichungstag der Anmeldung: 18.11.1993
(73) Patentinhaber: Tetra Laval Convenience Food GmbH & Co. KG, 35216 Biedenkopf-Wallau (DE)
(72) Erfinder: Schmidt, Karlheinz, W-3564 Steffenberg-Quotshausen (DE); Tillmanns, Klaus, W-3551 Bad Endbach (DE); Schneider, Arno, W-3560 Biedenkopf-Wallau (DE)
(74) Vertreter: Missling, Arne, Dipl.-Ing.

(56) Entgegenhaltungen:
- DE-A- 3 026 835
- DE-A- 3 831 585
- DE-U- 8 709 188
- US-A- 2 014 859
- US-A- 3 070 410

## Beschreibung

Die Erfindung betrifft eine Dichtungsanordnung für eine Lagerstelle an dem freien, mit einem rotierenden Werkzeug versehenen Ende einer Antriebswelle, insbesondere bei Maschinen für die Bearbeitung von Lebensmittelmassen als Bearbeitungsgut, wobei sich das Werkzeug wahrend der Bearbeitung in dem Bearbeitungsgut befindet, die Lagerstelle eine beständige Anwesenheit eines Schmiermittels erfordert und mittels einer Labyrinthdichtung eine Kontaktierung des Bearbeitungsgutes mit dem Schmiermittel verhindert wird, wobei die Labyrinthdichtung aus mindestens zwei ringförmigen, axial gerichteten Stegen und dazu passenden ringförmigen Rillen besteht, die an gegeneinander rotierenden Teilen der Dichtungsanordnung vorgesehen sind, und wobei ferner für die Abdichtung der Lagerstelle elastische Ringdichtungen vorgesehen sind, die mit einem gegen sie bewegten kreiszylindrischen Dichtelement zusammenwirken.

Ein wesentliches Anwendungsgebiet der Erfindung ist die Abdichtung an dem Messerkopf eines Kutters bei der Wurstwarenherstellung.

Eine Dichtungsanordnung dieser Art ist aus der deutschen Offenlegungsschrift DE-A-38 31 585 bereits bekannt. Im Gegensatz zu anderen Anordnungen, bei denen als elastische Ringdichtungen radiale Lippendichtungen verwendet werden, ist bei dieser Anordnung vorgesehen, stattdessen axial wirksame Lippendichtungen einzusetzen, um eine zu starke Reibung zwischen der Dichtlippe und dem zugehörigen Dichtelement und damit eine unzulässige Erwärmung im Bereich der Dichtungsanordnung zu vermeiden. Das erklärte Ziel ist dabei, daß die bearbeitete Lebensmittelmasse oder ein bei der Reinigung verwendetes Spülwasser nicht in den Bereich der Lagerstelle eindringen kann. Hingegen wird dabei in Kauf genommen, daß ein erstes Schmiermittel gelegentlich in den Bereich der Lebensmittelmasse dringen kann; es muß deshalb ein physiologisch unbedenkliches Lebensmittelfett als erstes Schmiermittel verwendet werden. Trotzdem besteht aber weiterhin die Gefahr, daß die Lebensmittelmasse durch die erste Labyrinthdichtung hindurch in den Bereich einer Dichtung gelangt, wenn nur der Druck im Spalt der Labyrinthdichtung groß genug ist. Dann ist es möglich, daß sich infolge der großen Hitze an der Dichtstelle die Konsistenz der Lebensmittelmasse ändert, die Reibung erhöht und die Dichtung zerstört wird.

Die Erfindung hat sich demzufolge die Aufgabe gestellt, eine Dichtungsanordnung der eingangs näher bezeichneten Art so zu gestalten, daß eine optimale Schmierung der elastischen Ringdichtungen erfolgt, daß aber weder Lebensmittelmasse in diesen Teil der Anordnung gelangen kann, noch das Schmiermittel in die Lebensmittelmasse übergeht und sich gegebenenfalls mit dieser vermischt. Es wird also eine strenge Isolierung beider Stoffsysteme gegeneinander angestrebt.

Erfindungsgemäß wird die Aufgabe dadurch gelöst, daß zwischen den ringförmigen Stegen und/oder einem der ringförmigen Stege und dem kreiszylindrischen Dichtelement Ringräume/ein Ringraum vorgesehen sind, deren/dessen Querschnitts-Breite durch den Abstand der Stege voneinander und/oder des einen Steges von dem Dichtelement, und deren/dessen Querschnitts-Höhe durch die Differenz zwischen der Höhe der Stege und der Tiefe der zugehörigen ringförmigen Rille bestimmt ist, wobei die Größe der Ringräume derart bestimmt ist, daß sie die zwischen zwei Wartungsintervallen eindringende Menge an Schmiermittel und Bearbeitungsgut aufnehmen können.

Auf diese Weise wird mindestens ein, vorteilhaft zwei konzentrisch angeordnete Ringräume gebildet, wobei der innere Ringraum zur Speicherung des überschüssigen Schmiermittels und der äußere Ringraum zur Speicherung der über die äußere Labyrinthdichtung eingedrungenen Lebensmittelmasse dienen. Wegen des Druckabfalls über die Labyrinthdichtungen sind beide Ringräume nahezu drucklos, so daß die jeweils darin gespeicherten Stoffe dort verbleiben und nicht weiterwandern. Es genügt daher, in zeitlichen Intervallen, die von der Größe der Ringräume abhängig sind, diese von den gespeicherten Stoffen zu reinigen. Auf diese Weise kann das Werkzeug relativ lange betrieben werden, ohne daß eine Vermischung der Lebensmittelmasse mit dem Schmiermittel oder deren wechselweise Abwanderung in den jeweils anderen Funktionsbereich zu befürchten wäre.

Weitere Merkmale der Erfindung enthalten die Unteransprüche. Dabei ergibt sich eine Ausbildung der beteiligten Bauteile, insbesondere auch eine Gestaltung der Stege und der Rillen, die einer leichten Reinigung zugänglich ist, so daß Rückstände vor einem erneuten Einsatz des Werkzeuges ausgeschlossen werden können. Damit bleibt aber die Funktionsfähigkeit der erfindungsgemäßen Ringräume stets weitgehend erhalten. Die Form des inneren Ringraumes ist in Bezug auf den anschließenden Labyrinthspalt so gewählt, daß das in dem Ringraum gespeicherte Schmiermittel infolge der Fliehkraft des bewegten ersten Drehteiles in ein Raumkompartiment gelangt, von dem aus das Schmiermittel nicht durch das Labyrinth transportierbar ist. Eine sichere Beherrschung der erfindungsgemäßen Dichtungsanordnung vorausgesetzt, ist es auch möglich, nur ein einziges Schmiermittel einzusetzen oder jedenfalls darauf zu verzichten, daß die Ringdichtungen nur von einem physiologisch unbedenklichen Lebensmittel-Fett geschmiert werden.

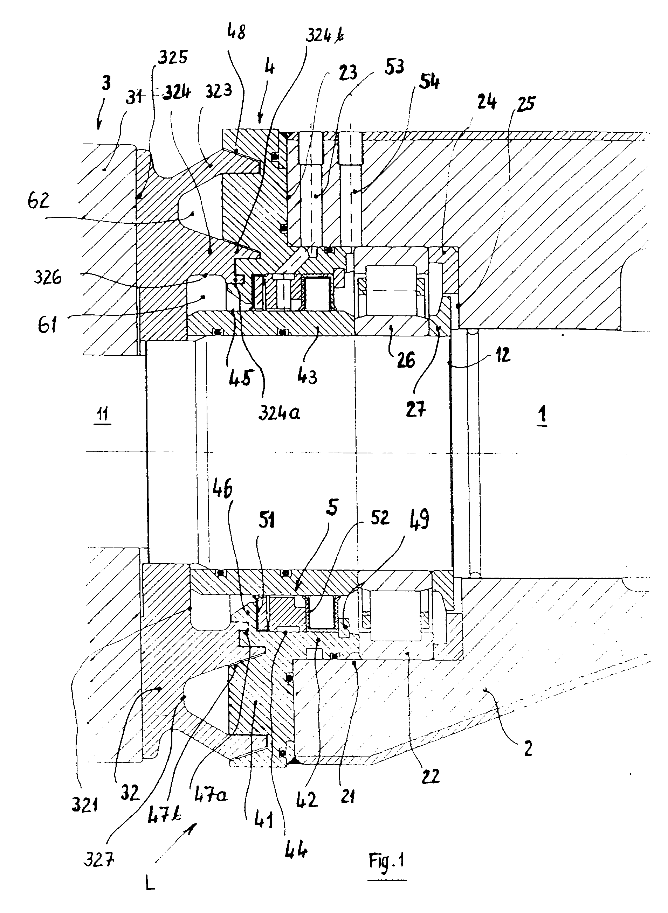

Die Erfindung wird nachstehend anhand der Zeichnung an einem Ausführungsbeispiel näher erläutert. Die einzige Fig. 1 der Zeichnung zeigt einen Längsschnitt durch eine Lagerstelle an der Messerwelle eines Kutters für Wurstmassen.

Eine Antriebswelle 1 ist in nicht weiter dargestellter Weise an ihrer auf der Zeichnung rechten Seite mit der Abtriebswelle eines Antriebsmotors drehfest verbunden. Sie ist in einem ortsfesten Lagergehäuse 2 gelagert, wobei in der Zeichnung nur die linke Lagerstelle L zu sehen ist, die das freie Ende 11 der Antriebswelle 1 abfängt. An dem Ende 11 ist ein Messerkopf als Werkzeug 3 befestigt, von dem in der Zeichnung nur ein Anschlußbund 31 zu sehen ist. An dem Anschlußbund 31 ist ein erstes Drehteil 32 starr befestigt und auf diese Weise über den Messerkopf drehfest mit der Antriebswelle 1 verbunden. An einer ersten, in der Zeichnung rechten Stirnseite 321 des Drehteils 32 sind ringförmige Stege 324;323 einstückig an dem Drehteil 32 vorgesehen, wohingegen dessen andere Stirnseite 325 direkt an dem Anschlagbund 31 anschlägt.

Das Lagergehäuse 2 ist in Richtung auf das Werkzeug 3 mit einer kreiszylindrischen Ausnehmung 21 versehen, in der ein Radiallager, hier ein Zylinderrollenlager 22, zur Lagerung der Antriebswelle 1 gehaltert ist. Dazu ist an der Stirnfläche 23 des Lagergehäuses 2 ein zweites Drehteil 4 starr befestigt. Das Drehteil 4 besteht einstückig aus einer Kreisscheibe 41 und einer koaxialen Buchse 42, die in die Ausnehmung 21 hineinragt und bis zu dem Zylinderrollenlager 22 reicht. Der Außenring des Zylinderrollenlagers 22 schlägt über ein Distanzstück 24 an einer Kreisringfläche 25 der Ausnehmung 21 an. Auf diese Weise ist der Außenring des Zylinderrollenlagers 22 axial festgelegt. Der Innenring 26 des Zylinderrollenlagers 22 wird von einem nabenförmigen Dichtelement 43, einem achsbeweglich auf der Antriebswelle 1 vorgesehenen Laufring, gegen einen Distanzring 27 gedrückt, der seinerseits an einem Bund 12 der Antriebswelle 1 anschlägt, wenn das Dichtelement 43 in dieser Richtung belastet wird. Zwischen der Innenkontur 44 der Buchse 42 und der Außenkontur 45 des Dichtelementes 43 ist ein Dichtbereich 5 vorgesehen, der aus einer einfachen Ringdichtung 51 und einer doppelten Ringdichtung 52 besteht. Die Ringdichtungen 51 und 52 sind als Lippendichtungen ausgeführt, so daß ihre Lippen auf der Kontur 45 gleiten, wenn die Antriebswelle 1 bewegt wird. Zwischen den beiden Ringdichtungen 51 und 52 mündet ein erster Schmiermittelkanal 53, der durch das Lagergehäuse 2 nach außen geführt ist und dort in einem nicht dargestellten Schmiernippel endet. Das durch den Schmiermittelkanal 53 geförderte Schmiermittel dient insbesondere zur Schmierung der Ringdichtung 51. Ein zweiter Schmiermittelkanal 54 sorgt dafür, daß das Zylinderrollenlager 22 unmittelbar geschmiert wird. Außerdem wird gleichzeitig die Ringdichtung 52 versorgt, so daß durch die Reibung zwischen deren Lippen und dem Dichtelement 43 keine Reibungswärme entstehen kann. Die erfindungsgemäße Anordnung, die nachfolgend beschrieben wird, läßt es zu, daß durch beide Schmiermittelkanäle 53 und 54 das gleiche Schmiermittel gefördert wird. Im übrigen ist der Dichtbereich 5 im bekannter Weise so gestaltet, daß alle Elemente gegen einen Anschlagbund 46 an dem Drehteil 4 anliegen und andererseits gegen axiale Verschiebung durch einen Spannring 49 gesichert sind.

Der Anschlagbund 46 verbindet den Dichtungsbereich 5 mit einem ersten Ringraum 61, der axial von der Stirnwand 321 und dem Anschlagbund 46 und radial von der Außenkontur 45 des Dichtungselementes 43 und einer kreiszylindrischen Innenkontur 326 des Steges 324 gebildet wird. Der Steg 324 endet in Richtung auf das Drehteil 4 in zwei Teilstegen 324a und 324b, deren Querschnitt mit korrespondierenden Rillen 47a und 47b des Drehteiles 4 zusammenfällt. Der Einstich der Rille 47a ist dabei so gelegt, daß dessen kleinerer Druchmesser kleiner ist als der Außendurchmesser des Ringraumes 61. Auf diese Weise befindet sich im Bereich der kreiszylindrischen Kontur 326 ein Teilraum des Ringraumes 61, der sich zunächst mit Schmiermittel anfüllt, das durch die Zentrifugalkraft in diesen Bereich gelangt. Dieses Schmiermittel kann demzufolge die von den Stegen 324 und den Rillen 47 gebildete erste Labyrinthdichtung nicht passieren.

Der zweite ringförmige Steg 323 reicht zum Teil in eine Rille 48, deren Querschnitt mit dem in ihm gelagerten Teil des Steges 323 deckungsgleich ist. Auf diese Weise ergibt sich ein zweiter Ringraum 62, der durch die beiden ringförmigen Stege, das Drehteil 4 und einen Ringboden 327 begrenzt ist. Die Form des Ringraumes 62 ist an und für sich beliebig, er muß nur groß genug sein, um in einem vorgegebenen Zeitraum die gesamte durch die zweite Labyrinthdichtung 323;48 eingeführte Lebensmittelmasse speichern zu können. Im Ausführungsbeispiel ist der Querschnitt des Ringraumes 62 trapezförmig ausgeführt, so daß das Axialspiel zwischen den Stegen 323 und 324 und dem Drehteil 4 festlegbar ist. Im übrigen sind auch die Querschnitte der Rillen 47b und 48 als Trapeze ausgebildet, um sie leichter reinigen zu können.

## Patentansprüche

1. Dichtungsanordnung für eine Lagerstelle (22) an dem freien, mit einem rotierenden Werkzeug (3) versehenen Ende (11) einer Antriebswelle (1), insbesondere bei Maschinen für die Bearbeitung von Lebensmittelmassen als Bearbeitungsgut, wobei sich das Werkzeug während der Bearbeitung in dem Bearbeitungsgut befindet, die Lagerstelle eine beständige Anwesenheit eines Schmiermittels erfordert und mittels einer Labyrinthdichtung eine Kontaktierung des Bearbeitungsgutes mit dem Schmiermittel verhindert wird, wobei die Labyrinthdichtung aus mindestens zwei ringförmigen, axial gerichteten Stegen (323, 324) und dazu passenden ringförmigen Rillen (47a, 47b, 48) besteht, die an gegeneinander rotierenden Teilen (32, 41) der Dichtungsanordnung vorgesehen sind, und wobei ferner für die Abdichtung der Lagerstelle (22) elastische Ringdichtungen (51, 52) vorgesehen sind, die mit einem gegen sie bewegten kreiszylindrischen Dichtelement zusammenwirken, dadurch gekennzeichnet, daß zwischen den ringförmigen Stegen (323; 324) und/oder einem der ringförmigen Stege (324) und dem kreiszylindrischen Dichtelement (43) Ringräume/ein Ringraum (61; 62) vorgesehen sind, deren/dessen Querschnitts-Breite durch den Abstand der Stege (323; 324) voneinander und/oder des einen Steges (324) von dem Dichtelement (43) und deren/dessen Querschnitts-Höhe durch die Differenz zwischen der Höhe der Stege (323; 324) und der Tiefe der zugehörigen ringförmigen Rille (47; 48) bestimmt ist, wobei die Größe der Ringräume derart bestimmt ist, daß sie die zwischen zwei Wartungsintervallen eindringende Menge an Schmiermittel und Bearbeitungsgut aufnehmen können.

2. Dichtungsanordnung nach Anspruch 1, dadurch gekennzeichnet, daß die Stege (323; 324) sämtlich an einer Stirnseite (321) eines ersten rotationssymmetrischen Drehteiles (32) ausgebildet sind, welches auf der Antriebswelle (1) zwischen dem Werkzeug (3) und dem Dichtelement (43) eingespannt ist, wenn das Werkzeug (3) auf die Antriebswelle (1) radial und axial unbeweglich befestigt ist und dabei mit seiner anderen Stirnseite (325) an dem Werkzeug (3) anliegt.

3. Dichtungsanordnung nach Anspruch 1 oder 2, dadurch gekennzeichnet, daß die Rillen (47; 48) sämtlich an einer Stirnseite eines zweiten rotationssymmetrischen Drehteiles (4) ausgebildet sind, welches mit seiner anderen Stirnseite an einem Lagergehäuse (2) für die Lagerstelle (L) der Antriebswelle (1) starr befestigt ist.

4. Dichtungsanordnung nach einem der Ansprüche 1 bis 3, dadurch gekennzeichnet, daß zwischen den Ringdichtungen (51; 52) und dem Dichtelement (43) Schmiermittel einbringbar sind, die über Schmiermittelkanäle (53; 54) zugeführt werden.

5. Dichtungsanordnung nach Anspruch 1 bis 4, dadurch gekennzeichnet, daß ein erster Ringraum (61) zwischen dem Dichtelement (43) und einem ersten, inneren Steg (324) vorgesehen ist, und daß der äußere Durchmesser dieses Ringraumes (61) größer ist als der innere Durchmesser der zu dem Steg (324) gehörigen ersten Rille (47).

6. Dichtungsanordnung nach einem der Ansprüche 1 bis 3, dadurch gekennzeichnet, daß die Querschnitte der ringförmigen Stege (323; 324) und Rillen (47; 48), die zueinander gehören, ungefähr gleich sind.

7. Dichtungsanordnung nach Anspruch 6, dadurch gekennzeichnet, daß die Stege (323; 324) und Rillen (47; 48) einen trapezförmigen Querschnitt aufweisen, wobei die jeweils den größeren Ringdurchmessern zugehörigen Mantelflächen jeweils einen sich in Richtung der Lagerstelle (L) verjüngenden Kegelstumpf bilden.

8. Dichtungsanordnung nach einem der Ansprüche 1 bis 7, dadurch gekennzeichnet, daß zwei Ringdichtungen (51; 52) vorgesehen sind, zwischen denen ein Schmiermittel, insbesondere ein physiologisch unbedenkliches Schmiermittel, zugeführt wird.

9. Dichtungsanordnung nach einem der Ansprüche 1 bis 8, dadurch gekennzeichnet, daß eine dritte Ringdichtung vorgesehen ist, die unmittelbar einem Lager (22) benachbart ist, wobei zwischen der Ringdichtung und dem Lager (22) ein Schmiermittel zugeführt wird.

## Claims

1. A sealing arrangement for a bearing (22) at the free end (11) of a drive shaft (1), the said end being provided with a rotating tool (3), more particularly in machines for processing foodstuffs as processing materials, the tool being located in the processing materials during processing, the bearing requiring the constant presence of a lubricant, and contact between the processing materials and the lubricant being prevented by a labyrinth seal comprising at least two annular axially oriented arms (323, 324) and annular grooves (47a, 47b, 48) fitted thereto, the said arms and grooves being arranged on parts (32, 41) of the sealing arrangement which rotate against one another, resilient ring seals (51, 52) also being provided to seal the bearing (22) and co-operating with a circular cylindrical sealing member which is moved against them, **characterised in that** annular chambers/an annular chamber (61; 62) are/is provided between the annular arms (323; 324) and/or between one of the annular arms (324) and the circular cylindrical sealing member (43), the cross-sectional width of the said chamber(s) being determined by the separating distance between the arms (323; 324) and/or the separating distance between one arm (324) and the sealing member (43), and the cross-sectional height of the said chamber(s) being determined by the difference between the height of the arms (323; 324) and the depth of the associated annular groove (47; 48), the size of the annular chambers being determined in such a way that they can receive the amount of lubricant and processing materials which passes into them between two maintenance periods.

2. A sealing arrangement in accordance with claim 1, **characterised in that** the arms (323; 324) are all formed on one end surface (321) of a first rotationally symmetrical rotating part (32) which is clamped on the drive shaft (1) between the tool (3) and the sealing member (43) when the tool (3) is secured on the drive shaft (1) so as to be radially and axially undisplaceable, the other end surface (325) of the said part (32) thus resting against the tool (3).

3. A sealing arrangement in accordance with claim 1 or 2, **characterised in that** the grooves (47; 48) are all formed on one end surface of a second rotationally symmetrical rotating part (4) which is rigidly secured via its other end surface on a housing (2) for the bearing (L) of the drive shaft (1).

4. A sealing arrangement in accordance with one of claims 1 to 3, **characterised in that** lubricants can be introduced between the ring seals (51; 52) and the sealing member (43), the said lubricants being supplied via lubricant channels (53; 54).

5. A sealing arrangement in accordance with claims 1 to 4, **characterised in that** a first annular chamber (61) is provided between the sealing member (43) and a first inner arm (324), and the outer diameter of the said annular chamber (61) is larger than the inner diameter of the first groove (47) associated with the arm (324).

6. A sealing arrangement in accordance with one of claims 1 to 3, **characterised in that** the cross-sections of the annular arms (323; 324) and grooves (47; 48) associated with one another are substantially equal.

7. A sealing arrangement in accordance with claim 6, **characterised in that** the arms (323; 324) and the grooves (47; 48) have a trapezoidal cross-section, the generated surfaces which are respectively associated with the larger annular diameters each forming a truncated cone which tapers in the direction of the bearing (L).

8. A sealing arrangement in accordance with one of claims 1 to 7, **characterised in that** two ring seals (51, 52) are provided, between which a lubricant, particularly a physiologically harmless lubricant, is supplied.

9. A sealing arrangement in accordance with one of claims 1 to 8, **characterised in that** a third ring seal is provided and is directly adjacent to a bearing (22), a lubricant being supplied between the ring seal and the bearing (22).

## Revendications

1. Dispositif d'étanchéité pour une portée (22) située à l'extrémité libre (11) munie d'un outil rotatif (3), d'un arbre moteur (1), en particulier dans des machines destinées au traitement de masses de denrées alimentaires comme matériau à traiter, l'outil se trouvant dans le matériau à traiter pendant le traitement, la portée nécessitant la présence permanente d'un lubrifiant et une garniture à labyrinthe empêchant un contact entre le matériau à traiter et le lubrifiant, cette garniture à labyrinthe étant composée d'au moins deux nervures annulaires (323, 324) dirigées axialement et de rainures complémentaires (47a, 47b, 48) prévues sur des parties (32, 41) du dispositif d'étanchéité tournant l'une par rapport à l'autre, et des garnitures annulaires élastiques (51, 52) étant en outre prévues pour rendre la portée (22) étanche, ces garnitures coopérant avec un élément d'étanchéité cylindrique circulaire en mouvement par rapport à elles, caractérisé en ce qu'il est prévu, entre les nervures annulaires (323, 324) et/ou entre l'une des nervures (324) et l'élément d'étanchéité cylindrique circulaire (43), un ou des espaces annulaires (61, 62) dont la section transversale a une largeur déterminée par la distance entre les nervures (323, 324) et/ou entre l'une des nervures (324) et l'élément d'étanchéité (43), et une hauteur déterminée par la différence entre la hauteur des nervures (323, 324) et la profondeur des rainures annulaires correspondantes (47, 48), la dimension des espaces annulaires étant déterminée de telle manière qu'ils puisse contenir la quantité de lubrifiant et de matériau à traiter qui y pénètre entre deux intervalles d'entretien.

2. Dispositif d'étanchéité selon la revendication 1, caractérisé en ce que les nervures (323, 324) sont formées en totalité sur l'une des faces (321) d'une première pièce tournante (32) à symétrie de révolution, serrée sur l'axe moteur (1) entre l'outil (3) et l'élément d'étanchéité (43), lorsque l'outil (3) est monté sur l'arbre moteur (1) sans pouvoir se déplacer ni radialement ni axialement et s'appuie ainsi par son autre face (325) sur l'outil (3).

3. Dispositif d'étanchéité selon l'une des revendications 1 ou 2, caractérisé en ce que les rainures (47, 48) sont formées en totalité sur l'une des faces d'une deuxième pièce tournante (4) à symétrie de révolution, fixée rigidement par son autre face à un logement de palier (2) pour la portée (L) de l'arbre moteur (1).

4. Dispositif d'étanchéité selon l'une des revendications 1 à 3, caractérisé en ce que des lubrifiants, amenés à travers des conduits de graissage (53, 54), peuvent être introduits entre les garnitures annulaires (51, 52) et l'élément d'étanchéité (43).

5. Dispositif d'étanchéité selon l'une des revendications 1 à 4, caractérisé en ce qu'il est prévu un premier espace annulaire (61) entre l'élément d'étanchéité (43) et une première nervure intérieure (324), et en ce que le diamètre extérieur de cet espace annulaire (61) est supérieur au diamètre intérieur de la première rainure (47) correspondant à la nervure (324).

6. Dispositif d'étanchéité selon l'une des revendications 1 à 3, caractérisé en ce que les sections transversales des nervures annulaires (323, 324) et des rainures annulaires (47, 48) complémentaires sont à peu près égales.

7. Dispositif d'étanchéité selon la revendication 6, caractérisé en ce que les nervures (323, 324) et les rainures (47, 48) présentent une section transversale trapézoïdale, les surfaces latérales qui correspondent respectivement aux plus grands diamètres annulaires formant respectivement un tronc de cône qui s'amincit dans la direction de la portée (L).

8. Dispositif d'étanchéité selon l'une des revendications 1 à 7, caractérisé en ce qu'il est prévu deux garnitures annulaires (51, 52) entre lesquelles est amené un lubrifiant, en particulier un lubrifiant physiologiquement neutre.

9. Dispositif d'étanchéité selon l'une des revendications 1 à 8, caractérisé en ce qu'il est prévu une troisième garniture annulaire située au voisinage immédiat d'un roulement (22), un lubrifiant étant amené entre la garniture annulaire et le roulement (22).
